Europäisches Patentamt

European Patent Office

Office européen des brevets

(19)

(11) Veröffentlichungsnummer : **0 160 751
B1**

(12) **EUROPÄISCHE PATENTSCHRIFT**

(45) Veröffentlichungstag der Patentschrift :
30.09.87

(21) Anmeldenummer : 84116360.3

(22) Anmeldetag : 27.12.84

(51) Int. Cl.⁴ : **A 45 C   5/00**

(54) **Gepäcksatz.**

(30) Priorität : 07.05.84 DE 8413837 U

(43) Veröffentlichungstag der Anmeldung :
13.11.85 Patentblatt 85/46

(45) Bekanntmachung des Hinweises auf die Patenterteilung : 30.09.87 Patentblatt 87/40

(84) Benannte Vertragsstaaten :
AT BE CH DE FR GB IT LI LU NL SE

(56) Entgegenhaltungen :
DE-A- 2 140 164
DE-B- 1 294 836
DE-U- 7 535 144
GB-A-   826 078
US-A- 4 151 909

(73) Patentinhaber : Rienäcker, Klaus
Prinzregentenstrasse/Max-Josefs-Platz 1
D-8200 Rosenheim (DE)

(72) Erfinder : Rienäcker, Klaus
Prinzregentenstrasse/Max-Josefs-Platz 1
D-8200 Rosenheim (DE)

(74) Vertreter : WILHELMS, KILIAN & PARTNER Patentanwälte
Eduard-Schmid-Strasse 2
D-8000 München 90 (DE)

EP 0 160 751 B1

**Beschreibung**

Die Erfindung bezieht sich auf einen Gepäcksatz. Ein derartiger Gepäcksatz ist beispielsweise aus der GB-A-826 078 bekannt, er dient insbesondere zur Verwendung und optimalen Ausnutzung von Autokofferräumen.

Autokofferräume sind insofern für die herkömmlichen Koffer, die üblicherweise im wesentlichen quaderförmig sind, nachteilig, da sie aufgrund einer schräg zulaufenden Rückenlehne keine vollständige Ausfüllung durch die herkömmlichen quaderförmigen Koffer ermöglichen.

Ferner besteht ein allgemeiner Wunsch der Benutzer derartiger aus Kofferelementen bestehender Gepäcksätze darin, diese Kofferelemente möglichst raumsparend stapeln zu können, so daß neuerdings Gepäcksätze angeboten werden, bei denen rechtwinklige Koffer ineinander versenkbar und somit leicht verstaubar, angeboten werden.

Derartige bekannte Sätze von Kofferelementen haben den Nachteil, daß sie, im Auto nebeneinander aufgereiht, eine stufenförmige Silhouette besitzen, welche den Kofferraum nicht zufriedenstellend ausfüllt.

Das Herumliegen von unverpackten oder schlecht verpackten Gepäckstücken, insbesondere in einem Autokofferraum, aber auch in anderen Fahrzeugen, wie Flugzeugen, Schiffen und ähnlichem ist häufig unerwünscht. Ein weiterer Nachteil derartiger nicht vollständig ausgefüllter Kofferräume besteht darin, daß beispielsweise bei Booten bei heftigem Wellengang durch die Schaukelbewegung ein ständiges Werfen des Gepäcks gegen die Wände erfolgt, was zu Beschädigungen der Koffer und des dazugehörigen Inhaltes führt.

Auch bei Flugzeugen ist es erwünscht, daß ein Gepäckraum möglichst vollständig ausgefüllt wird, bei kleinen Privatmaschinen bereits wegen der sonst unerwünschten ungleichmäßigen Auslastung.

Es ist Aufgabe der Erfindung einen Gepäcksatz zu schaffen, welcher sich leicht an die verschiedensten Kofferraumformen anpassen läßt, aber dennoch das Erfordernis möglichst vollständiger Raumerfüllung bei verschiedensten Fahrzeugkofferräumen erfüllt.

Die Aufgabe wird erfindungsgemäß durch einen Gepäcksatz gelöst, der gekennzeichnet ist durch eine Kombination aus mehreren quaderförmigen Kofferelementen unterschiedlicher Größe, mindestens einem prismatischen Schrägkofferelement und mindestens einem Stufenkofferelement.

Dadurch, daß erfindungsgemäß verschiedene Kofferelemente, nämlich Kofferstufenelemente und Schrägkoffer vorgesehen werden, ist es erstmals möglich, durch diese beiden Elemente in Kombination mit dazu abgestimmten, in einander stapelbaren quaderförmigen Kofferelementen das gewünschte Ergebnis zu erzielen.

Dabei ist es besonders vorteilhaft, daß sich der erfindungsgemäße Gepäcksatz durch lediglich geringfügige Änderungen beispielsweise der Stufenkoffer, auf die verschiedensten Fahrzeugtypen abstellen läßt ; bei einer geringen Anzahl Grundmodelle ist daher eine zufriedenstellende Belieferung breitester Käuferkreise möglich.

Im folgenden wird die Erfindung anhand von lediglich Ausführungsbeispiele darstellenden Zeichnungen näher erläutert. Es zeigt :

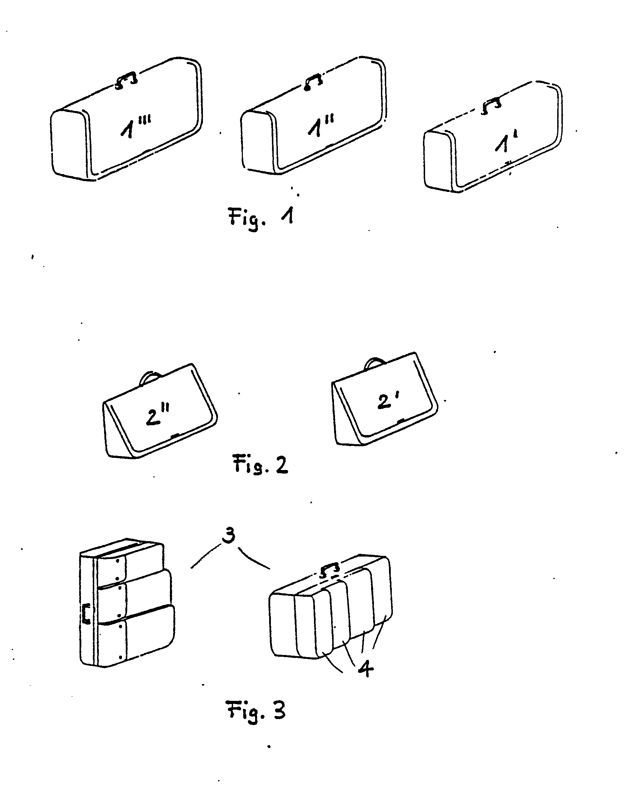

Figur 1 eine perspektivische Darstellung der im wesentlichen quaderförmigen Kofferelemente eines Gepäcksatzes ;

Figur 2 Schrägkofferelemente ;

Figur 3 Stufenkofferelemente ;

Figur 4 eine seitliche Draufsicht auf einen erfindungsgemäßen, zusammengebauten Gepäcksatz ; und

Figur 5 eine Draufsicht auf den in Fig. 4 dargestellten Gepäcksatz mit anderer Lage des Stufenkofferelements.

In den Figuren ist ein Gepäcksatz für Fahrzeuge dargegestellt, welcher in seinem grundsätzlichen Aufbau aus ineinander stapelbaren quaderförmigen Kofferelementen unterschiedlicher Größe (1°, 1', 1", 1''') in Kombination mit einem oder mehreren presmatischen Schrägkofferelementen (2', 2") und einem Stufenkofferelement 3 aufweist.

Die erfindungsgemäßen Schrägkofferelemente werden den verschiedenen Neigungen, wie sie üblicherweise in Gepäckräumen von Fahrzeugen auftreten, angepaßt. Bevorzugterweise besitzen sie eine Seitenwand, welche gegenüber der waagerechten zwischen 55 bis 75 Grad geneigt ist. Diese Schrägkoffer sind in der Fig. 2 dargestellt. Die erfindungsgemässen Stufenkoffer 3 besitzen Stufen 4 senkrecht zum Kofferboden, die in ihrer Tiefe entsprechend der Breite der ineinander stapelbaren quaderförmigen Kofferelemente 1 variieren.

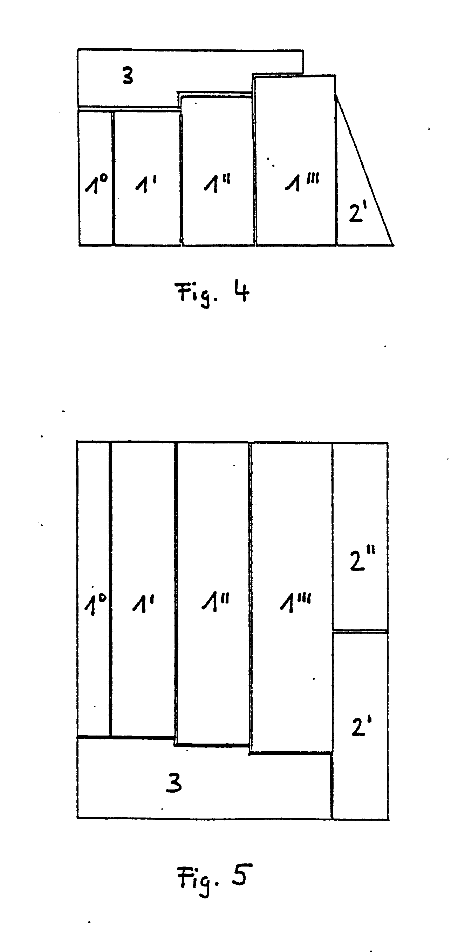

Zum besseren Verständnis ist der zusammengebaute Gepäcksatz in der Seitenansicht in Fig. 4 dargestellt. In Fig. 5 ist eine Draufsicht auf die in Fig. 4 dargestellte Anordnung zu sehen, wobei ersichtlich ist, daß Stufenkoffer sowohl auf die abgestuften quadratischen Koffer gelegt werden können, die hintereinander gestellt ein stufenförmiges Profil ergeben, als auch seitlich gegen diese abgestufte Kofferreihe gestellt werden können, um die seitlich durch die verschiedenen Größen auftretende Abstufung nutzbar zu machen.

Durch die erfindungsgemäße Ausgestaltung der drei Grundelemente ergibt sich somit erstmals die Möglichkeit, durch Variation dieser einzelnen Satzelemente eine zufriedenstellende Ausfüllung der verschiedensten Kofferraumtypen zu erzielen.

Für einen Kofferraum eines Kraftfahrzeugs der Mittelklasse, wie es als « Golf », Baujahr 1983 von der Volkswagen AG im Handel ist, ist folgender Koffersatz geeignet : 4 quaderförmige Kofferelemente, die ineinander verstaubar sind, mit den Maßen : erstes Kofferelement : Länge 71 cm, Höhe 32 cm, Breite 16 cm ; zweites Kofferelement :

Länge 69 cm, Höhe 30 cm, Breite 14 cm ; drittes Kofferelement : Länge 67 cm, Höhe 28 cm, Breite 12 cm sowie viertes Kofferelement : Länge 65 cm, Höhe 26 cm, Breite 10 cm.

Ferner gehören zum Koffersatz für den « Golf » zwei Stufenkofferelemente, von welchen dem zumindest eines beispielsweise als Kleidersack ausgebildet sein kann ; die Maße des ersten Stufenkofferelementes sind : Länge : 60 cm, Höhe : 55 cm und Breite : 6 cm ; zweites Stufenkofferelement : Länge : 60 cm, Höhe : 45 cm und Breite : 6 cm. Ferner sind zwei Schrägkofferelemente Bestandteil des Koffersatzes, welche bei einem « Golf » hinter die abgeschrägte Rückenlehne verstaut werden, die beide eine Länge von 45 cm, Höhe von 36 cm und Breite von 14 cm besitzen.

In ähnlicher Weise können Kofferelemente für jede Art von Kofferraum hergestellt werden, wobei sich wesentliche Teile des Gepäcksatzes für ein Fahrzeug auch für ein anderes Fahrzeug verwenden lassen, also beispielsweise der Koffersatz für den « Golf » auch teilweise für einen « Mercedes » geeignet ist, falls noch größere/kleinere quaderförmige Kofferelemente hinzugefügt werden und anders abgeschrägte Schrägkofferelemente und Stufenkofferelemente eingesetzt werden.

**Patentansprüche**

1. Gepäcksatz, gekennzeichnet durch eine Kombination aus mehreren quaderförmigen Kofferelementen (1) unterschiedlicher Größe, mindestens einem prismatischen Schrägkofferelement (2) und mindestens einem Stufenkofferelement (3).

2. Gepäcksatz nach Anspruch 1, dadurch gekennzeichnet, daß die im wesentlichen quaderförmigen Kofferelemente (1) in Größenabstufungen vorliegen, so daß die kleineren Kofferelemente jeweils in den größeren Kofferelementen des Satzes vollständig aufnehmbar sind.

3. Gepäcksatz nach Anspruch 1 oder 2, dadurch gekennzeichnet, daß das Stufenkofferelement auf mindestens einer Seite mehrere, bevorzugt drei bis vier Stufen aufweist, die senkrecht zur Stellfläche verlaufen, wobei die Tiefe oder Breite der Stufen (4) der Breite der quaderförmigen Kofferelemente (1) des Kofferelementsatzes entspricht.

4. Gepäcksatz gemäß einem der vorangehenden Ansprüche, dadurch gekennzeichnet, daß die Schrägkoffer eine mit zwischen 55 bis 75 Grad gegen die Waagerechte geneigte Seitenwand aufweist.

**Claims**

1. A baggage set, characterized by a combination of a plurality of parallelepipedic case elements (1) of different sizes, at least one prismatic sloping case element (2) and at least one stepped case element (3).

2. A baggage set according to claim 1, characterized in that the substantially parallelepipedic case elements (1) have size stages, so that the smaller case elements can always be completely received in the larger case elements of the set.

3. A baggage set according to claim 1 or 2, characterized in that the stepped case element on at least one side has several and preferably three or four steps at right angles to the standing basis, the depth or width of the steps (4) corresponding to the width of the parallelepipedic case elements (1) of the case element set.

4. A baggage set according to one of the preceeding claims, characterized in that the sloping case has a side wall sloping with respect to the horizontal between 55 and 75°.

**Revendications**

1. Collection de bagages caractérisée par une combinaison de plusieurs coffres (1) parallélépipédiques de dimensions différentes, d'au moins un coffre oblique prismatique (2) et d'au moins un coffre à gradins (3).

2. Collection de bagages suivant la revendication 1, caractérisée en ce que les coffres (1) essentiellement parallélépipédiques présentent un échelonnement de dimensions tel que les petits coffres puissent toujours être complètement logés dans les grands coffres de la collection.

3. Collection de bagages suivant la revendication 1 ou 2, caractérisée en ce que le coffre à gradins présente au moins sur une face plusieurs gradins, de préférence trois ou quatre, qui s'étendent perpendiculairement à la face d'appui, la profondeur ou la largeur des gradins (4) correspondant à la largeur des coffres (1) parallélépipédiques de la collection.

4. Collection de bagages suivant l'une des revendications précédentes, caractérisée en ce que le coffre oblique présente une paroi inclinée d'un angle compris entre 55 et 75° par rapport à l'horizontale.

Fig. 1

Fig. 2

Fig. 3

Fig. 4

Fig. 5